# EUROPEAN PATENT SPECIFICATION

(11) **EP 1 075 344 B1**
(45) Date of publication and mention of the grant of the patent: **23.07.2003**
(21) Application number: 98920654.5
(22) Date of filing: 08.05.1998
(51) Int. Cl.: B23K 7/10

(54) **CUTTING**
SCHNEIDEN
PROCEDE ET DISPOSITIF SERVANT A COUPER DES ARTICLES

(43) Date of publication of application: 14.02.2001
(73) Proprietor: Heckett Multiserv France S.A., Hammersmith, London W6 8DW (GB)
(72) Inventor: DETRONDE, Michel, F-54700 Maidières (FR)
(74) Representative: Shaw, Laurence
(86) International application number: GB9801328
(87) International publication number: WO99058284

(56) References cited:
- EP-A- 0 422 610
- GB-A- 808 709
- US-A- 2 743 101

## Description

The invention relates to cutting, and in particular to the cutting of solid articles, especially metal articles such as semi-finished iron and steel products, e.g. slabs blooms and billets and finished sections e.g. flat iron, sheet metal and the like. Such articles are typically products at a continuous casting steelworks.

US-A-2743101 discloses an apparatus for guiding a cutting torch, the cutting torch disclosed comprises a valve body which is supplied with fuel gases by a gas manifold, and which has a single outlet through which a cutting flame is produced.

It is one object of this invention to provide apparatus and a method of cutting, which makes a clean cut more quickly efficiently and without burring.

Accordingly in one aspect the invention provides an apparatus for cutting a solid article, the apparatus consisting of a blade having a cutting edge, the blade being supplied with cutting gas from a gas manifold to produce a cutting flame **characterised in that** the blade has a plurality of spaced apart outlets along one edge, means are present for supplying gas to each outlet to produce a cutting flame, and means are present to control the supply of gas to each outlet whereby the power of gas supply to each outlet may be varied and the outlets may be activated in a predetermined sequence.

By means of the invention a predetermined sequential flux of flame from the outlets can be arranged to optimise the cutting of any particular product.

Preferably the apparatus includes means for moving the apparatus relative to the article.

The blade may take a variety of shapes. The cutting edge may be for example, straight, circular, elliptical or the like. In one preferred form the blade is sword like and has an arcuate edge portion containing the outlets; preferably the portions beyond the ends of the arcuate portion are cut away to prevent burned off metal from dripping.

The number of outlets will be selected according to the work the apparatus is intended to perform. Preferably one or more outlets are arranged to produce a cutting flame, having the necessary kinetic energy. One or more outlets, typically at the lower end, are arranged for trimming or deburring.

Preferably valve means are present to regulate the supply of gas to each outlet; for example to seal the outlet, to open it to allow low pressure supply; or to open it to allow high pressure supply. Preferably a control means such as a computer is present to regulate the flow of gas to one, some or all of the outlets in accordance with a predetermined pattern.

In another aspect the invention provides a method of cutting a solid article using apparatus consisting of a flame cutting tool comprising a blade having a cutting edge, the method comprising the steps of supplying gas to the blade from a gas manifold, igniting the gas to produce a cutting flame, and moving the blade relative to the solid article to be cut **characterised in that** the blade has a plurality of spaced apart gas outlets along an edge thereof and in that and the power of the supply of gas to each outlet is varied and provided in a predetermined sequence.

Preferably a blow torch is used in advance of the apparatus and synchronised to operate in association with the first gas outlet.

Preferably the jets are arranged in line and the gas is supplied or not supplied to individual outlets of a blade in a predetermined pattern. The gas may be any single combustible gas or a mixture; oxygen is preferred.

In a preferred feature the apparatus and the article are arranged for relative movement during cutting; for example, the blade is moved towards a side of the article and then through it to cut the article into two.

The method may be applied to solid articles of metals; alloys; composites. The article may be of rectangular, square, circular or other cross-sectional shape. The article may be up to 500 mm thick. The cutting may be done when the article is hot or cold.

When cutting a flat product (e.g. slabs, blooms and billets) the blade is preferably carried by a mechanism which places it in the plane of the kerf to be made (which may be vertical or oblique). The blade moves in a parallel direction above the base plane of the article being cut, i.e. the plane on which the article lies. Preferably no part of the cutting apparatus crosses that plane which means that it will not be affected by any mechanisation of the layout area (e.g. roller table or other table). However, as with other known cutting tools, the cutting area must leave a passage open for slag and molten metal to escape.

At the lower end of the blade is preferably a deburring nozzle or outlet. This is positioned and angled to be directed at the bottom of the cutting edge and hence will be adjacent the region of the base plane of the article.

The angle of the cutting edge (i.e. the angle attributed to the blade in relation to the movement axis in its movement plane) can be varied and adjusted continuously throughout cutting.

The invention enables cutting to take place quickly at a speed at least comparable with a thermal saw and, for example, has the following advantages:
- cutting faster than 1 m/min on cold metallurgical products
- cutting faster than 2 m/min on hot products up to rolling temperature (about 1200°C for steel)
- cutting is clean without burring to avoid any additional finishing that is always difficult to perform when hot
- the cutting tool has minimal volume so that no part extends below the lower plane of the object to be cut, so that an automatic machine can position the tool on a product which has already been worked
- the making a narrow cutting kerf in relation to the thickness to be cut:
   - e.g. of about 10 mm for products thicker than 100 mm
   - of about 6 and 8 mm for under 100 mm of thickness
- production of cutting thicknesses varying from a few cm to several hundred cm; and
- the number of cutting jets used, i.e. the number of outlets or nozzles, may be varied widely but, in general, cutting quality is improved by increasing the number of jets.

In order that the invention may be well understood it will now be described by way of example only with reference to the accompanying diagrammatic drawings in which:
Figure 1 is a side elevation of one apparatus of the invention having a blade with a curved cutting edge;
Figure 2A is a side elevation of two kerfs cut into a product; and Figure 2B is a plan view of the kerf of Figure 2A;
Figure 3A is a side elevation of a sequence of cuts using a curved blade and Figure 3B is the same for a straight blade;
Figure 4A is a side view showing nozzles of a cutting blade and an initiation nozzle;
Figure 4B is a plan view partly in section showing in the region of the lowermost nozzle;
Figure 5 illustrates the sequences of gas power applied to the nozzles of a blade;
Figure 6 shows apparatus for cutting different thicknesses and types of article;
Figure 7 shows apparatus for use with a more limited range of articles;
Figure 8 shows apparatus for a single type of article only;
Figure 9 is a section of one apparatus including water cooling; and
Figures 10A, 10B; 11A, 11B: and 12A, 12B and 12C illustrate diagrammatically different cutting sequences.

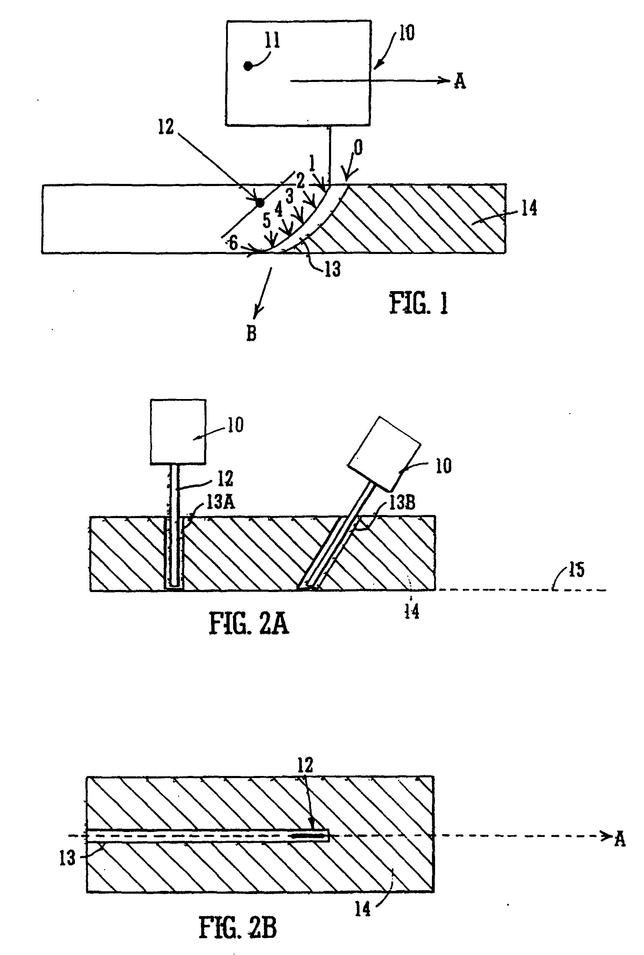

As shown in Figure 1, a cutting apparatus 10 of the invention comprises a gas manifold 11 leading to a series of nozzles 1 to 6 of a curvilinear blade 12. The blade is used to cut a kerf 13 into a metal article 14. The apparatus can be advanced in the direction of arrow A. The blade may have a notional diameter, for example, of up to about 1m. An initiation blow torch 0 is positioned adjacent to the edge of the blade at the top surface of the article 14. Five cutting outlets and nozzles 1 to 5 are positioned along the edge of the blade and the lowermost outlet or nozzle 6 is for removing burrs and faces the lower edge of kerf 13. Molten metal and metal oxides flow away or are blown away from the kerf in the direction of arrow B.

The apparatus may be used to cut in different positions. In Figure 2A, the cut 13A is vertical and in Figure 2B the cut 13B is inclined. As shown in Figure 2A the blade is dimensioned that no portion of the cutting apparatus extends below the lower surface plane 15 of the article 14.

The cutting nozzles 1 to 5 supply the cutting gas and are calibrated at each level, e.g. height above plane 15 for example, so that the energy aspect is balanced, i.e. the cutting gas flow and pressure are sufficient:
- to melt metal on the cutting-edge
- to oxidise the minimum of metal to provide an exothermic reaction which will tend to compensate for losses due to internal heat conduction in the product to be cut
- to provide sufficient kinetic energy to push the flux of molten metal and oxide in the direction B.

The effects of the jets from the nozzles can vary according to their position along the edge, e.g increase from the top to bottom direction and the angles of incidence in relation to the horizontal may be varied in the same way. For example, nozzle No. 5 for a particular product could have a diameter of between 3 and 4 mm, the choice of diameter being made in relation to the intended use of the tool (single or multipurpose use) and in terms of thickness of the product to be cut.

Cutting nozzle 5 (see Figure 1) uses strong kinetic energy, to blow the liquid metal so that it does not stick to the underneath of the product by capillary action. In a uniform advancing speed cutting phase, additional deburring may not be required.

The deburring nozzle 6 (see Figure 1) is to compensate for variations in the effective kinetic energy of nozzle no. 5 during transitory periods (e.g. acceleration/slowing down of the tool) as well as during changes in the angular position of the blade. The deburring nozzle is angled forwards with a slight downward inclination (a few degrees in relation to the horizontal) so that its action is directed at the bottom of the cutting edge in the plane 15.

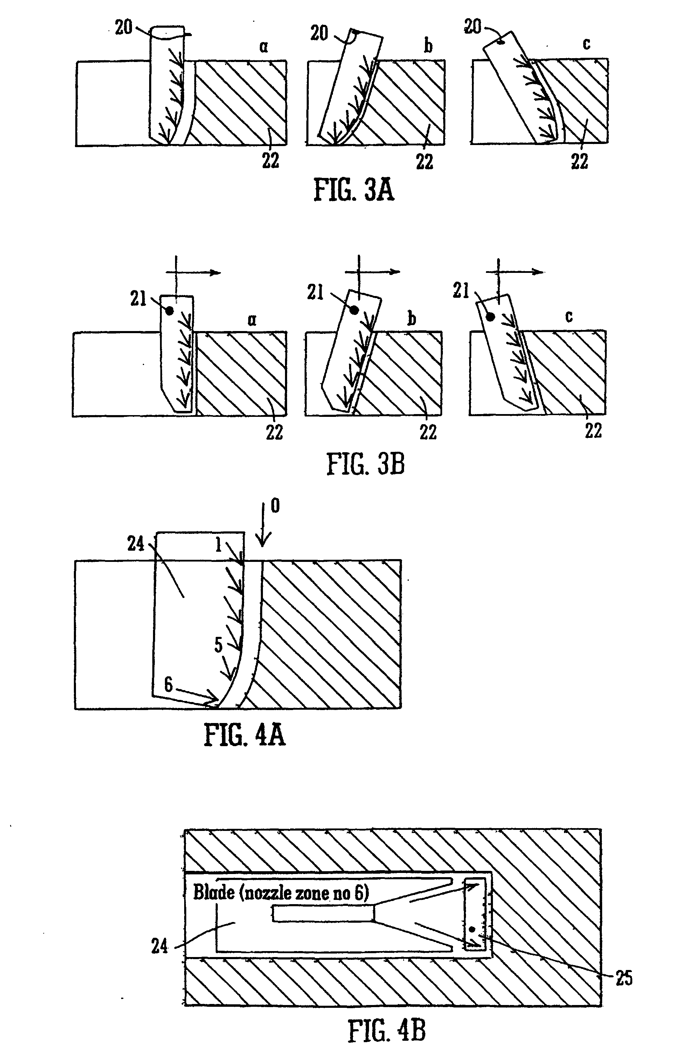

At least two types of deburring nozzles are possible. The choice will be made in relation to the product to be cut, e.g.
- 1 large diameter nozzle (see Figure 1)
- 2 small diameter divergent nozzles (see Figures 4B and 4C).

The initial blowtorch 0 is located above the upper side of the product. It precedes the blade and its action is synchronised with the first active nozzle. The blowtorch imitates the cutting action, which is then taken up by nozzles 1 to 6 and the gas flow increased until the predetermined cutting speed is reached.

Once cutting has started. the blowtorch will still have an active role. Where the article being cut is cold it may be
- used to compensate for losses due to internal conduction of the heat from the oxidation reaction within the product to be cut,
- used on hot products (600°C and above), it is not used after initiation but is available for a wash of the cut face so that the product has a high quality face edge.

The blowtorch may be of a wide variety of devices such as an oxyacetylene torch or electric arc + heating nozzle; laser + heating nozzle; or the like.

The blade 20 of Figure 3A has a curvilinear cutting edge whereas blade 21 of Figure 3B as a rectilinear cutting edge.

In both cases the blade is shown in three positions, a, b and c as follows a typical exemplary programme relative to an article 22 being cut.

The angle of the cutting edge (angle attributed to the blade in relation to the movement axis in its movement plane) can be varied and adjusted continuously throughout cutting.
- a at the beginning to allow a fast initiation of the cut
- b in the middle of the cut for optimum speed
- c at the end of the cut for a trim.

The positioning of nozzles 1 to 5 and deburring nozzle 6 of a cutting blade 24 relative to initiating blowtorch 0 at the start of cutting is shown in Figure 4A. Figure 4B shows the blade 24 in the region of the deburring nozzle 6 and indicating a channel 25 for the egress of molten metal and oxide is present at the bottom.

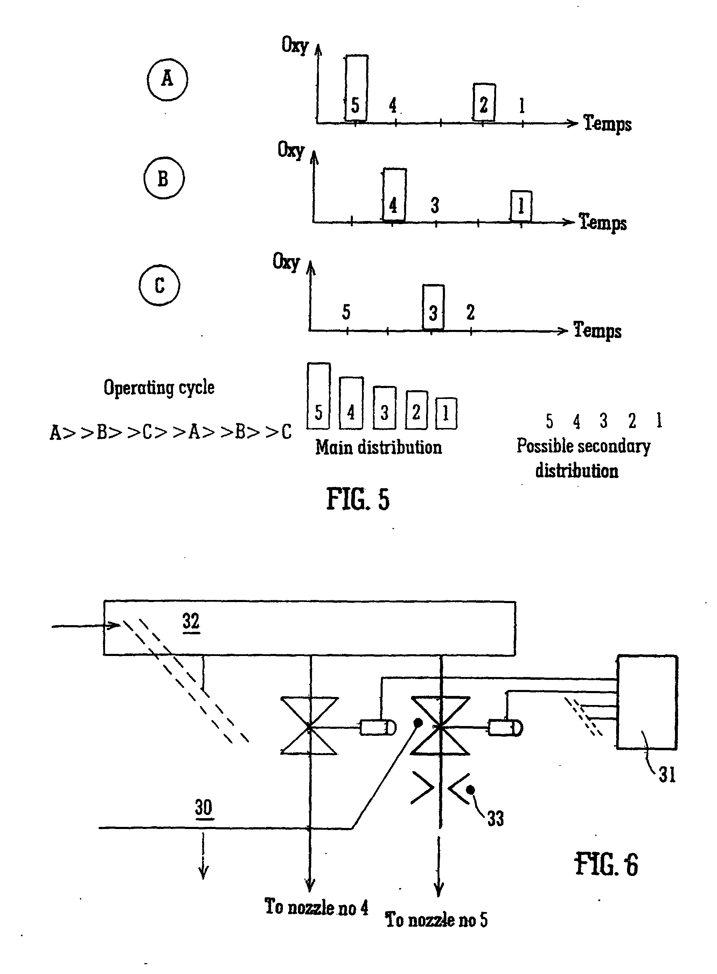

The apparatus shown in Figure 1 includes a manifold 11 having a PLC arranged to produce a cyclic wave of cutting gas across the nozzles. The frequency is adjusted cyclically and alternates between the different stages in the cutting processes, namely dynamic action, when it blasts away oxides and molten metal (clearing the surface of the cutting edge), and exothermic oxidation, when it initiates the fusion of this cleared metal. The graphs of Figure 5 represent diagrammatically the principle of distribution where the volume supplied by each nozzle is directly linked to its position in the cutting edge. The cutting gas flux generated in this way is changeable and of variable intensity throughout kerfing. At nozzle level, the flux appears to be "scrambled" (i.e. has a similarity with digital electric signals in relation to analog signals) by way of comparison.

The tables below exemplify the power distribution for 5 active nozzles. T is the time at start of the operation. There are three possible conditions for each nozzle.
- normal cutting power jet for its position in the cut (NP)
- intermediary power jet (IP)
- zero power jet (OP)

**TABLE I**

| **NOZZLE NO.** | **5** | **4** | **3** | **2** | **1** |
|---|---|---|---|---|---|
| Jets at instant T | NP | IP | OP | NP | PP |
| At T+1 | IP | OP | NP | IP | OP |
| At T+2 | OP | NP | IP | OP | NP |
| T+3 = same as T | NP | IP | OP | NP | IP |

A second arrangement is possible (the consolidation wave will be in front of the main wave in every cycle).

**TABLE II**

| **NOZZLE NO.** | **5** | **4** | **3** | **2** | **1** |
|---|---|---|---|---|---|
| Jets at instant T | NP | OP | IP | NP | OP |
| At T+1 | OP | IP | NP | OP | IP |
| At T+2 | PI | NP | OP | IP | NP |
| T+3 = same as T | NP | OP | IP | NP | OP |

The action of jets at three power levels is "brutal" and the cutting quality may not be sufficient for certain products which are difficult and/or very thick. On an individual basis, consideration may be given to the advisability of reducing the fluctuations in the cutting gas flux by introducing 4, 5 or more levels of jet power for both cycles above.
e.g.
NP = normal power
HIP = higher intermediary power HIP < NP
LIP = lower intermediary power O < LIP < HIP

The apparatus shown in Figure 6 is a multipurpose tool (e.g. a tool capable of cutting different thicknesses and types of product). Each nozzle (e.g. nos. 4 and 5 are indicated) is supplied by a fast solenoid valve 30 which is in turn guided by a sequencer or automaton 31 via a diaphragm valve 33, whereby the supply of gas 32 for cutting is directed as appropriate. Several solenoid valves may be present in the same gas line.

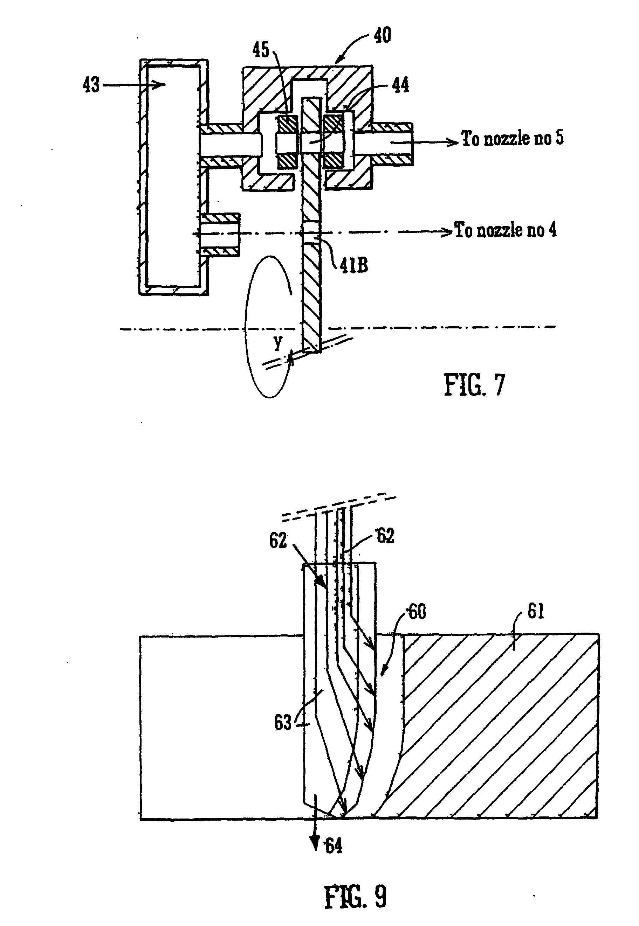

Figure 7 shows apparatus useful for cutting products of known thickness with a simple, fast change between two series of different products. Gas feed can be controlled by a device 40 having a rotating distributor disc 42 having ports 41A,41B which either allows or stops the flow of cutting gas from supply 43. This solution allows for a good deal of flexibility in defining a cutting blade range. The closed window 41B leads to nozzle no. 4 whereas the open window 41A leads to nozzle no. 5. The disc rotates about its axis in the direction of arrow Y as shown. Gas flow passes through a disc diaphragm 44 and the disc is sealed in its housing by seals 45. The dimensions of the disc 42 and the shape and size of the ports may be used to control the cutting height and number of active nozzles and the number of wave levels.

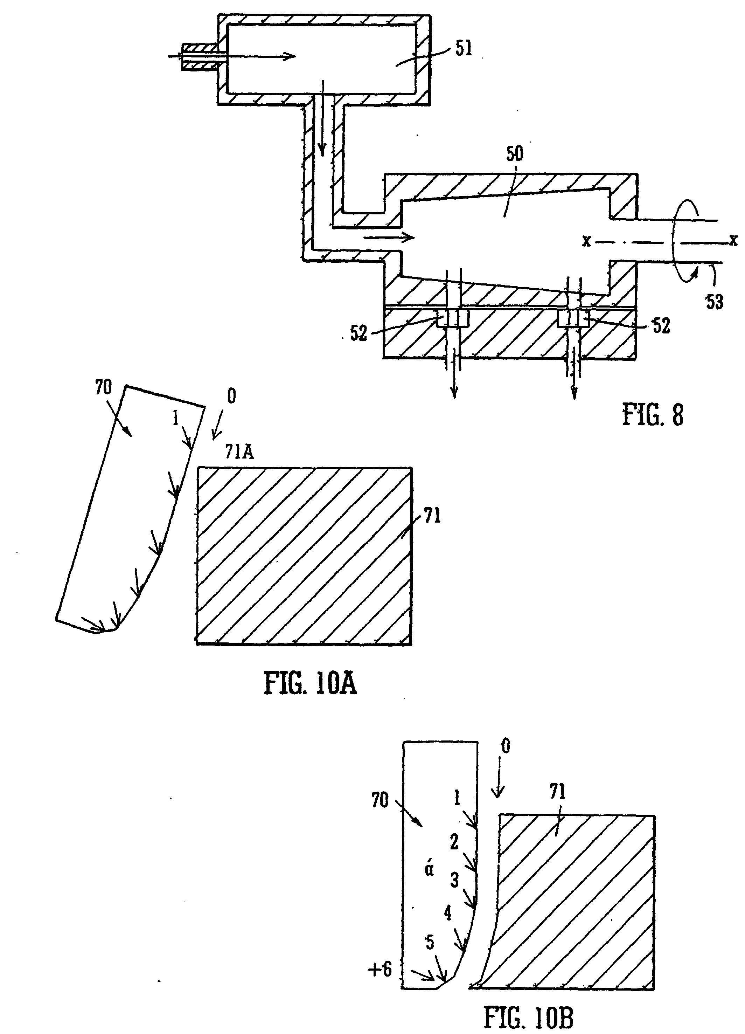

The apparatus of Figure 8 is dedicated to one application only. Gas distribution is provided by rotating a drum 50 which can be a cylinder or "cone" shaped. Gas is supplied to the drum from supply 51 and passes to the cutting nozzles (nos. 1 and 5 only being shown) via diaphragm valves 52. The apparatus is started by rotating pin 53.

The apparatus of these three examples, (Figures 6, 7, and 8) a priori, dedicated to the particularities in cutting production to be assured, can be associated all other forms of distribution whether they be mechanical, electrical, electronic, aeraulic or any possible combination of these which leads to generating this sequential cutting gas wave in variable form.

Whatever type of distributor is used, the cutting gas is supplied to the nozzle for a determined time period.

The gas jet used in the invention is "fixed" and has a controlled injection time. Because of the inertia of the gas column on opening, there is a risk of delay to the jet action and of the reaction in progress going out A buffer tank is, therefore, preferably present between the distributor system and the diaphragm valve to "choke" the end of the delivery so that there is a recovery period before the following cycle.

In Figure 9 a cutting blade 60 used to cut a product 61 has an upper water inlet 62 supplying channels 63 inside the blade and exiting at 64 adjacent the lowermost portion of the blade. Such a cooled blade enables the blade to remain dimensionally stable during prolonged use, e.g. for splitting flat products.

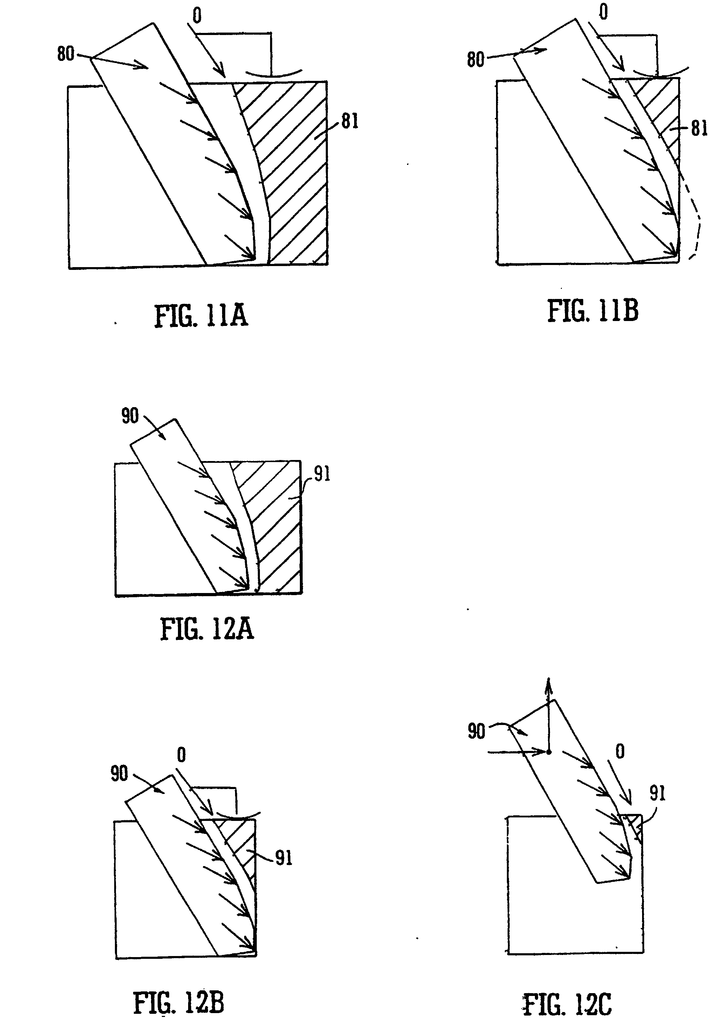

In Figure 11A blade 70 is shown in position for initiation of cutting to take place on the upper comer 71A of the product 71. Tipping the blade backwards reduces the forward incidence of the first active nozzle 1 and thus helps initiation of the reaction. When the comer 71A is melted the blade is straightened (Figure 10B) the gas supply to the other nozzles is started so that they are active at the right moment. Cutting kerfs are thus formed properly.

The blade 80 of Figure 11A cuts into the product 81 from the bottom. In this configuration, the blowtorch 0 is active (or reactivated on heat cutting) until the end of cutting.

The blade 90 of Figure 12A is advanced to the product 91 and tipped forwards. In Figure 13B the blade has removed some of the product and at the end of the cut (Figure 13C) the blade is lifted until it is totally removed from the product at the final point before separation, the 'blow' from torch 0 being maintained until the end.

If the stability of the two pieces of the product is not assured by the product's geometry, in order to avoid any expensive, "fragile" mechanisation in the layout area, a graded "GAUGE" type accessory of approximately the same width as the thickness of the blade is provided which can follow close behind the blade. At the end of the cut, if the edges of the kerf become narrower, the gauge will become stuck. The blade can continue to withdraw. This gauge is thus an expendable addition to the process. Depending on production rhythm, this gauge could be installed automatically by a suitable device or positioned manually.

In Figure 14 are shown examples of blade adjustment in relation to the thickness to be cut.

In Figure 14A the blade 95 is of greater length than the thickness of product 96 to be cut and the lower nozzles only plus initiating torch 0 come into play. In Figure 14B, a thicker product 97 is to be cut and more of the intermediate nozzles come into play. In Figure 14C the product is thick enough to require use of all the nozzles.

As indicated above, an important preferred feature of the process is not to let anything pass below the layout plane (99 in Figure 14A) of the product to be cut.

In addition, it will be appreciated that for the lesser thicknesses:
- only the nozzles acting in the kerf are activated
- the cutting speed will be faster due to a shorter cutting edge (less energy to remove the molten metal).

The invention is not limited to the specific embodiments described above. The nozzles may be positioned as close to each other as is technically possible. It is possible that an area between two adjacent nozzles will not be activated as much as an area directly opposite the nozzles. If this proves to be a problem for the blade's operation, the apparatus may be complemented with a vibrational movement, e.g. of about ½ pitch between the nozzles. This movement could be a vertical oscillation or oscillation around the blade's angling axis. The means to move the cutting blade relative to the article to be cut may be, for example, by means of a carriage carrying the apparatus in a rectilinear movement. Alternatively the blade may be carried in a pendulous movement.

## Claims

1. Apparatus (10) for cutting a solid article (14,22,61,71,81,96,97), the apparatus (10) comprising a blade (12,20,21,24,60,70,80,90,95) having a cutting edge, the blade (12,20,21,24,60,70,80,90,95) being supplied with cutting gas from a gas manifold (11) to produce a cutting flame **characterised In that** the blade (12,20,21,24,60,70,80,90,95) has a plurality of spaced apart outlets (1-6) along one edge, means are present for supplying gas to each outlet (1-6) to produce a cutting flame, and means (40) to control the supply of gas (32,51) to each outlet whereby the power of gas supply (32,51) to each outlet (1-6) may be varied and the outlets (1-6) may be activated in a predetermined sequence.

2. Apparatus (10) according to Claim 1, including means to move the blade (12,20,21,24,60,70,80,90,95) relative to the article (14,22,61,71,81,96,97).

3. Apparatus (10) according to Claim 1 or 2, wherein the blade (12,20,21,24,60,70,80,90,95) contains a network of pipes passing gases to the outlets (1-6) at the edge of the blade (12,20,21,24,60,70,80,90,95).

4. Apparatus (10) according to any preceding Claim, wherein the blade (12,20,21,24,60,70,80,90,95) has a straight, elliptical or circular cutting edge.

5. Apparatus (10) according to any preceding Claim, wherein the outlets (1-6) are calibrated and angled to provide a predetermined sequence of cutting power.

6. Apparatus (10) according to any preceding Claim, wherein the gas supply (32,51) to each outlet (1-6) includes a valve (30) which is programmed (31), whereby the apparatus (10) is adjustable to cut different thicknesses and types of article (14,22,61,71,81,96,97).

7. Apparatus (10) according to Claim 6, wherein the programming (31) is arranged to generate a wave across the outlets (1-6).

8. Apparatus (10) according to any preceding Claim, wherein the blade (12,21,21,24,60,70,80,90,95) is carried by a mechanism which places it in the plane of the kerf (13) to be made.

9. Apparatus (10) according to any preceding Claim, arranged so that no part of the apparatus (10) crosses the plane on which the article (14,22,61,71,81,96,97) to be cut lies.

10. Apparatus (10) according to any preceding Claim, wherein the blade (12,20,21,24,60,70,80,90,95) contains means to pass-cooling fluid therethrough.

11. A method of cutting a solid article (14.22,61,71,81,96,97) using apparatus (10) consisting of a flame cutting tool comprising a blade (12,20,21,24,60,70,80,90,95) having a cutting edge, the method comprising the steps of supplying gas to the blade (12,20,21,24,60,70,80,90,95) from a gas manifold (11), igniting the gas to produce a cutting flame, and moving the blade (12,20,21,24,60,70,80,90,95) relative to the solid article (14,22,61,71,81,96,97) to be cut **characterised in that** the blade (12,20,21,24,60,70,80,90,95) has a plurality of spaced apart gas outlets (1-6) along one edge, **and in that** the power of the supply of gas (32,51) to each outlet (1-6) is varied and is provided in a predetermined sequence.

12. A method according to Claim 11, in which cutting is started using an initiation torch (0) adjacent one end of the edge containing the outlets (1-6).

13. A method according to Claim 11 or 12, wherein a deburring operation is carried out through a nozzle (6) adjacent one end of the edge containing the outlets (1-6).

14. A method according to any one of Claims 11 to 13, in which the angle of the outlets (1-6) relative to the article (14,22,61,71,81,96,97) to be cut is varied and adjusted continuously throughout cutting.

15. A method according to any of claims 11 to 14, including applying a wave force to the gas (32,51) supplied to the outlets (1-6).

16. A method according to Claim 15, in which a buffer tank is provided in the gas supply system to provide a recovery period between cycles of the gas supply sequences.

17. A method according to any one of Claims 11 to 16, in which the blade (70) is angled to an upper comer (71A) of the product (71) at the start of cutting gas supply, the blade (70) is straightened and gas (32,51) is then supplied to the other nozzles (1-6).

18. A method according to any of Claims 11 to 17, in which the cutting area is designed to leave a channel (25) for flow of slag and molten metal.

19. A method according to Claims 11 to 18, including cooling the apparatus (10).

20. A method according to any of claims 11 to 19, including vibrating the apparatus (10).

21. A method according to any of Claims 11 to 20, wherein the article (14,22,61,71,81,96,97) is cold.

22. A method according to any of Claims 11 to 20, wherein the article (14,22,61,71,81,96,97) is hot.

23. A method according to any of Claims 11 to 22, wherein the article (14,22,61,71,81,96,97) is a semi-finished product

24. A method according to any of Claims 11 to 23, including moving the blade (12,20,21,24,60,70,80,90,95) relative to the article (14,22,61,71,81,96,97) at substantially constant speed.

## Patentansprüche

1. Vorrichtung (10) zum Schneiden eines festen Gegenstands (14, 22, 61, 71, 81, 96, 97), wobei die Vorrichtung (10) mit einer Klinge (12, 20, 21, 24, 60, 70, 80, 90, 95) mit einer Schneidkante versehen ist und von einem Gasverteiler (11) mit einem Schneidgas versorgt wird, um eine Schneidflamme zu erzeugen, **dadurch gekennzeichnet, daß** die Klinge (12, 20, 21, 24, 60, 70, 80, 90, 95) eine Mehrzahl von beabstandeten einzelnen Austrittsöffnungen (1 bis 6) entlang einer Kante aufweist und eine Einrichtung zur Gaszufuhr zu jeder Austrittsöffnung (1 bis 6) für die Erzeugung einer Schneidflamme sowie eine Einrichtung (40) zum Steuern der Gaszufuhr (32, 51) zu jeder Austrittsöffnung vorgesehen sind, wobei die Energie der Gaszufuhr (32, 51) zu jeder Austrittsöffnung (1 bis 6) verändert werden kann und die Austrittsöffnungen (1 bis 6) in einer vorgegebenen Reihenfolge aktiviert werden können.

2. Vorrichtung (10) nach Anspruch 1, mit einer Einrichtung zum Bewegen der Klinge (12, 20, 21, 24, 60, 70, 80, 90, 95) relativ zu dem Gegenstand (14, 22, 61, 71, 81, 96, 97).

3. Vorrichtung (10) nach Anspruch 1 oder 2, worin die Klinge (12, 20, 21, 24, 60, 70, 80, 90, 95) ein Netzwerk von Leitungen enthält, die Gase zu den Austrittsöffnungen (1 bis 6) an der Kante der Klinge (12, 20, 21, 24, 60, 70, 80, 90, 95) führen.

4. Vorrichtung (10) nach einem der vorstehenden Ansprüche, worin die Klinge (12, 20, 21, 24, 60, 70, 80, 90, 95) eine gerade, elliptische oder kreisförmige Schneidkante aufweist.

5. Vorrichtung (10) nach einem der vorstehenden Ansprüche, worin die Austrittsöffnungen (1 bis 6) geeicht und in einem Winkel angeordnet sind, um eine vorgegebene Reihenfolge der Schneidenergie zu erreichen.

6. Vorrichtung nach einem der vorstehenden Ansprüche, worin die Gaszufuhr (32, 51) zu jeder Austrittsöffnung (1 bis 6) ein Ventil (30) aufweist, das programmiert (31) ist, wobei die Vorrichtung (10) einstellbar ist, um verschiedene Dicken und Arten von Gegenständen (14, 22, 61, 71, 81, 96, 97) zu schneiden.

7. Vorrichtung (10) nach Anspruch 6, worin das Programmieren (31) derart eingerichtet ist, daß über die Austrittsöffnungen (1 bis 6) hinweg eine Welle erzeugt wird.

8. Vorrichtung (10) nach einem der vorstehenden Ansprüche, worin die Klinge (12, 20, 21, 24, 60, 70, 80, 90, 95) von einem Mechanismus getragen wird, der sie in der Ebene der zu erzeugenden Schnittfuge (13) anordnet.

9. Vorrichtung (10) nach einem der vorstehenden Ansprüche, die derart angeordnet ist, daß kein Teil der Vorrichtung (10) die Ebene überschreitet, in welcher der zu schneidende Gegenstand (14, 22, 61, 71, 81, 96, 97) liegt.

10. Vorrichtung (10) nach einem der vorstehenden Ansprüche, worin die Klinge (12, 20, 21, 24, 60, 70, 80, 90, 95) eine Einrichtung zum Hindurchführen einer Kühlflüssigkeit aufweist.

11. Verfahren zum Schneiden eines festen Gegenstands (14, 22, 61, 71, 81, 96, 97) durch Einsatz einer Vorrichtung (10), die aus einem Flammenschneidwerkzeug besteht, das mit einer Klinge (12, 20, 21, 24, 60, 70, 80, 90, 95) mit einer Schneidkante ausgerüstet ist, wobei das Verfahren die Stufen des Gaszuführens zu der Klinge (12, 20, 21, 24, 60, 70, 80, 90, 95) von einem Gasverteiler (11), das Zünden des Gases zum Erzeugen einer Schneidflamme und das Bewegen der Klinge (12, 20, 21, 24, 60, 70, 80, 90, 95) relativ zu dem zu schneidenden festen Gegenstand (14, 22, 61, 71, 81, 96, 97) beinhaltet, **dadurch gekennzeichnet, daß** die Klinge (12, 20, 21, 24, 60, 70, 80, 90, 95) eine Mehrzahl von beabstandeten einzelnen Gasaustrittsöffnungen (1 bis 6) entlang einer Kante aufweist sowie die Energie der Gaszufuhr (32, 51) zu jeder Austrittsöffnung (1 bis 6) verändert und in einer vorgegebenen Reihenfolge bereitgestellt wird.

12. Verfahren nach Anspruch 11, bei dem das Schneiden unter Einsatz eines Initialbrenners (0) begonnen wird, der sich neben einem Ende der Kante, welche die Austrittsöffnungen (1 bis 6) aufweist, befindet.

13. Verfahren nach Anspruch 11 oder 12, worin mittels einer Düse (6), die sich neben einem Ende der die Austrittsöffnungen (1 bis 6) aufweisenden Kante befindet, ein Entgratungsvorgang durchgeführt wird.

14. Verfahren nach einem der Ansprüche 1 bis 13, bei dem der Winkel der Austrittsöffnungen (1 bis 6) relativ zu dem zu schneidenden Gegenstand (14, 22, 61, 71, 81, 96, 97) verändert und während des Schneidens kontinuierlich eingestellt wird.

15. Verfahren nach einem der Ansprüche 11 bis 14, einschließlich der Einwirkung einer Wellenkraft auf das den Austrittsöffnungen (1 bis 6) zugeführte Gas (32, 51).

16. Verfahren nach Anspruch 15, bei dem in dem Gaszufuhrsystem ein Pufferbehälter vorgesehen ist, um zwischen Zyklen der Gaszufuhrsequenzen einen Erholungszeitraum bereitzustellen.

17. Verfahren nach einem der Ansprüche 11 bis 16, bei dem die Klinge (70) zu Beginn der Schneidgaszufuhr in einem Winkel zu einer oberen Ecke (71a) des Produkts (71) angeordnet wird, die Klinge (70) ausgerichtet wird und dann das Gas (32, 51) den anderen Düsen (1 bis 6) zugeführt wird.

18. Verfahren nach einem der Ansprüche 11 bis 17, bei dem der Schneidbereich derart gestaltet ist, daß er einen Kanal (25) für das Strömen von Schlacke und geschmolzenem Metall freiläßt.

19. Verfahren nach Anspruch 11 bis 18, das ein Kühlen der Vorrichtung (10) beinhaltet.

20. Verfahren nach einem der Ansprüche 11 bis 19, das ein Vibrieren der Vorrichtung (10) beinhaltet.

21. Verfahren nach einem der Ansprüche 11 bis 20, worin der Gegenstand (14, 22, 61, 71, 81, 96, 97) kalt ist.

22. Verfahren nach einem der Ansprüche 11 bis 20, worin der Gegenstand (14, 22, 61, 71, 81, 96, 97) heiß ist.

23. Verfahren nach einem der Ansprüche 11 bis 22, worin der Gegenstand (14, 22, 61, 71, 81, 96, 97) ein Halbzeug ist.

24. Verfahren nach einem der Ansprüche 11 bis 23, das ein Bewegen der Klinge (12, 20, 21, 24, 60, 70, 80, 90, 95) relativ zu dem Gegenstand (14, 22, 61, 71, 81, 96, 97) mit einer im wesentlichen konstanten Geschwindigkeit beinhaltet.

## Revendications

1. Appareil (10) pour couper un article solide (14, 22, 61, 71, 81, 96, 97), l'appareil (10) comprenant une lame (12, 20, 21, 24, 60, 70, 80, 90, 95) ayant une arête coupante, la lame (12, 20, 21, 24, 60, 70, 80, 90, 95) étant alimentée en gaz de coupe à partir d'un distributeur de gaz (11) pour produire une flamme coupante, **caractérisé en ce que** la lame (12, 20, 21, 24, 60, 70, 80, 90, 95) a une pluralité de sorties espacées entre elles (1 à 6) le long d'une arête, des moyens sont disponibles pour fournir du gaz à chaque sortie (1 à 6), pour produire une flamme coupante, et des moyens (40) pour contrôler la fourniture de gaz (32, 51) à chaque sortie, moyennant quoi la puissance de la fourniture de gaz (32, 51) à chaque sortie (1 à 6) peut être variée et les sorties (1 à 6) peuvent être activées selon une séquence prédéterminée.

2. Appareil (10) selon la revendication 1, comprenant des moyens pour déplacer la lame (12, 20, 21, 24, 60, 70, 80, 90, 95) par rapport à l'article (14, 22, 61, 71, 81, 96, 97).

3. Appareil (10) selon la revendication 1 ou 2, dans lequel la lame (12, 20, 21, 24, 60, 70, 80, 90, 95) contient un réseau de tuyaux passant les gaz vers les sorties (1 à 6) sur l'arête de la lame (12, 20, 21, 24, 60, 70, 80, 90, 95).

4. Appareil (10) selon l'une quelconque des revendications précédentes, dans lequel la lame (12, 20, 21, 24, 60, 70, 80, 90, 95) a une arête coupante droite, elliptique ou circulaire.

5. Appareil (10) selon l'une quelconque des revendications précédentes, dans lequel les sorties (1 à 6) sont calibrées et disposées dans le sens angulaire pour fournir une séquence prédéterminée de puissance de coupe.

6. Appareil (10) selon l'une quelconque des revendications précédentes, dans lequel l'alimentation de gaz (32, 51) à chaque sortie (1 à 6) comprend une soupape (30) qui est programmée (31), moyennant quoi l'appareil (10) peut être ajusté pour couper des épaisseurs et des types d'articles (14, 22, 61, 71, 81, 96, 97) différents.

7. Appareil (10) selon la revendication 6, dans lequel la programmation (31) est disposée pour pouvoir générer une onde à travers les sorties (1 à 6).

8. Appareil (10) selon l'une quelconque des revendications précédentes, dans lequel la lame (12, 20, 21, 24, 60, 70, 80, 90, 95) est portée par un mécanisme qui la place dans le plan de l'encoche (13) à faire.

9. Appareil (10) selon l'une quelconque des revendications précédentes, disposé de sorte qu'aucune partie de l'appareil (10) ne croise le plan sur lequel est placé l'article (14, 22, 61, 71, 81, 96, 97) à couper.

10. Appareil (10) selon l'une quelconque des revendications précédentes, dans lequel la lame (12, 20, 21, 24, 60, 70, 80, 90, 95) comprend des moyens pour faire passer partout le fluide de refroidissement.

11. Procédé pour couper un article solide (14, 22, 61, 71, 81, 96, 97) en utilisant un appareil (10) consistant en un outil de coupe à la flamme comprenant une lame (12, 20, 21, 24, 60, 70, 80, 90, 95) ayant une arête coupante, ledit procédé comprenant les étapes consistant à alimenter en gaz la lame (12, 20, 21, 24, 60, 70, 80, 90, 95) à partir d'un distributeur de gaz (11), à allumer le gaz pour produire une flamme coupante et à déplacer la lame (12, 20, 21, 24, 60, 70, 80, 90, 95) par rapport à l'article solide (14, 22, 61, 71, 81, 96, 97) à couper, **caractérisé en ce que** la lame (12, 20, 21, 24, 60, 70, 80, 90, 95) a une pluralité de sorties de gaz (1 à 6), espacées entre elles le long d'une arête et **en ce que** la puissance de l'alimentation en gaz (32, 51) à chaque sortie (1 à 6) est variée et fournie selon une séquence prédéterminée.

12. Procédé selon la revendication 11, dans lequel la coupe commence par l'utilisation d'un chalumeau de démarrage (0) adjacent à une extrémité de l'arête contenant les sorties (1 à 6).

13. Procédé selon la revendication 11 ou 12, dans lequel l'opération d'ébavurage est effectuée à travers un diffuseur (6) adjacent à une extrémité de l'arête contenant les sorties (1 à 6).

14. Procédé selon l'une quelconque des revendications 11 à 13, dans lequel l'angle des sorties (1 à 6) par rapport à l'article (14, 22, 61, 71, 81, 96, 97) à couper est varié et ajusté continuellement pendant toute la durée de la coupe.

15. Procédé selon l'une quelconque des revendications 11 à 14, comprenant l'application d'une force vibrationnelle au gaz (32, 51) fourni vers les sorties (1 à 6).

16. Procédé selon la revendication 15, dans lequel le système d'alimentation de gaz est pourvu d'un réservoir tampon pour assurer une période de recouvrement entre les cycles des séquences de fourniture de gaz.

17. Procédé selon l'une quelconque des revendications 11 à 16, dans lequel la lame (70) est pliée à l'angle vers un coin supérieur (71A) du produit (71) au démarrage de l'alimentation en gaz de coupe, la lame (70) est redressée et le gaz (32, 51) est alors fourni aux autres diffuseurs (1 à 6).

18. Procédé selon l'une quelconque des revendications 11 à 17, dans lequel la zone de coupe est conçue de sorte à laisser une voie (25) pour l'écoulement des scories et du métal fondu.

19. Procédé selon l'une quelconque des revendications 11 à 18, comprenant le refroidissement de l'appareil (10).

20. Procédé selon l'une quelconque des revendications 11 à 19, comprenant la mise en vibration de l'appareil (10).

21. Procédé selon l'une quelconque des revendications 11 à 20, dans lequel l'article (14, 22, 61, 71, 81, 96, 97) est froid.

22. Procédé selon l'une quelconque des revendications 11 à 20, dans lequel l'article (14, 22, 61, 71, 81, 96, 97) est très chaud.

23. Procédé selon l'une quelconque des revendications 11 à 22, dans lequel l'article (14, 22, 61, 71, 81, 96, 97) est un produit semi-fini.

24. Procédé selon l'une quelconque des revendications 11 à 23, comprenant l'entraînement de la lame (12, 20, 21, 24, 60, 70, 80, 90, 95) par rapport à l'article (14, 22, 61, 71, 81, 96, 97) à une vitesse sensiblement constante.
